# EUROPÄISCHE PATENTSCHRIFT

(11) **EP 3 030 508 B1**
(45) Veröffentlichungstag und Bekanntmachung des Hinweises auf die Patenterteilung: **23.05.2018**
(21) Anmeldenummer: 14750337.9
(22) Anmeldetag: 01.08.2014
(51) Int. Cl.: B65H 26/06, B65H 26/02

(54) **VORRICHTUNG UND VERFAHREN ZUM FEHLERTRACKING BEI BANDMATERIALIEN**
APPARATUS AND METHOD FOR TRACKING DEFECTS IN SHEET MATERIALS
DISPOSITIF ET PROCÉDÉ DE REPÉRAGE DE DÉFAUTS POUR MATÉRIAUX EN BANDE

(30) Priorität: 06.08.2013 DE 102013108485
(43) Veröffentlichungstag der Anmeldung: 15.06.2016
(73) Patentinhaber: KHS GmbH, 44143 Dortmund (DE)
(72) Erfinder: HERRMANN, Jürgen-Peter, 57520 Rosenheim (DE); HERRMANN, Marius Michael, 57520 Rosenheim (DE); SCHORN, Wolfgang, 53506 Hönningen (DE)
(86) Internationale Anmeldenummer: PCT/EP2014/066630
(87) Internationale Veröffentlichungsnummer: WO 2015/018759

(56) Entgegenhaltungen:
- DE-A1-102009 029 084
- US-A1- 2009 088 889
- US-A1- 2010 063 750
- US-A1- 2012 057 162

## Beschreibung

Die Erfindung betrifft ein Verfahren und eine Vorrichtung zum Markieren eines Materialfehlers in einem Bandmaterial.

Bei der Bearbeitung von Bandmaterialien, wie beispielsweise Metallbändern, Papierbändern oder auch Kunststofffolien, werden diese abgerollt, durch die jeweiligen Bearbeitungsstationen geführt und abschließend wieder aufgerollt oder bspw. in Abschnitte zerteilt.

Beim Durchführen durch die Bearbeitungsstationen wird das Bandmaterial auf Materialfehler untersucht. Hierfür ist aus der DE 10 2004 010 479 A1 ein Verfahren bekannt, bei dem die Oberfläche eines Bandmaterials auf unterschiedliche Parameter ge-scannt wird, um die Oberflächenqualität zu bestimmen, wobei die gescannten Daten anschließend zum optimierten Aufschnitt des Bandes in einzelne Werkstücke verwendet werden. Zur Bearbeitung der Materialfehler ist es derzeit jedoch üblich, beim Bandmaterial bspw eine optische Überprüfung vorzunehmen und die fehlerhaften Stellen zu kennzeichnen. Zur Kennzeichnung können z.B. Farbmarkierungen aufgetragen oder Marker in das Bandmaterial eingebracht werden. Weitere Vorschläge finden sich in der US 2012/063 750 A1, der DE 10 2009 029 084 A1 und der US 2012(057 162 A1. Eine Alternative zur Farbmarkierung zeigt zudem die US 2009/088889 A1. die zum Auffinden von Oberflächendefekten Oberflächenstrukturen des Bandmaterials erfasst und beim Auffinden eines Defektes die Oberflächenstrukturmerkmale, die im Bereich eines ermittelten Defektes vorliegen, wiederauffindbar abspeichert.

Die Bearbeitung des Materialfehlers erfolgt üblicherweise nach dem Durchführen durch die Bearbeitungsstationen oder ggf. in einem separaten Arbeitsgang, bei dem das Bandmaterial erneut abgerollt wird. In jedem Fall durchläuft das Bandmaterial zwischen dem Erfassen des Fehlers und dem Bearbeiten des Fehlerszahlreiche Stationen der Vorrichtung, wie bspw. Umlenkrollen. Hierdurch werden die aufgebrachten Markierungen, welche den Materialfehler kennzeichnen, häufig verändert oder entfernt, so dass die Position des Materialfehlers nicht sicher ermittelt werden kann.

Um den Materialfehler trotz fehlerhafter Kennzeichnung zu lokalisieren, kann alternativ die Durchlaufgeschwindigkeit des Bandmaterials durch die Bearbeitungsstationen erfasst werden, so dass über eine Berechnung die Positionsbestimmung des Materialfehlers erfolgen kann.

Derartige Berechnungssysteme sind jedoch extrem ungenau und insbesondere bei Bandmaterialien, die beispielsweise während der Bearbeitung gestreckt oder geschrumpft werden, höchst unzuverlässig, so dass eine sichere Lokalisierung des Materialfehlers nicht erfolgen kann oder zum Bearbeiten der Materialfehler ggf. deutlich größere Bandabschnitte bearbeitet werden müssen

Der Erfindung liegt somit die Aufgabe zugrunde, ein Verfahren und eine Vorrichtung bereitzustellen, mit dem ein Materialfehler in einem Bandmaterial besonders genau, zuverlässig und dauerhaft gekennzeichnet, wieder aufgefunden und bearbeitet werden kann.

Die Erfindung löst die Aufgabe durch ein Verfahren zum Markieren eines Materialfehlers in einem Bandmaterial mit den Merkmalen des Anspruchs 1 und mit einer Vorrichtung mit den Merkmalen des Anspruchs 11. Vorteilhafte Weiterbildungen der Erfindung sind in den abhängigen Ansprüchen angegeben.

Das erfinderische Verfahren zum Markieren eines Materialfehlers in einem Bandmaterial weist mindestens die folgenden Schritte auf:
- Erfassen eines Materialfehlers in einem sich bewegenden Bandmaterial durch einen Fehlersensor,
- Erfassen eines Oberflächenstrukturmerkmals im Bereich des erfassten Materialfehlers durch einen ersten Markierungssensor und Ermittlung eines das Oberflächenstrukturmerkmal darstellenden ersten Strukturdatensatzes,
- Abspeichern des Strukturdatensatzes in einer Speichervorrichtung.

Dem erfindungsgemäßen Verfahren und der Vorrichtung liegt die Erkenntnis zugrunde, dass jede Oberfläche eines Gegenstandes individuell einmalige Strukturmerkmale aufweist, die zur Identifizierung eines Gegenstandes verwendet werden können. Selbst bei annähernd identischen Gegenständen unterscheiden sich die Oberflächenstrukturen derart, dass eine eindeutige Identifizierung des jeweiligen Gegenstandes möglich ist. Ein in einem Oberflächenabschnitt erfasstes Strukturmerkmal stellt somit einen eindeutigen "Fingerabdruck" zur Wiedererkennung dar.

Über die Erfassung eines solchen individuellen Strukturmerkmals der Oberfläche im Bereich des Materialfehlers ist die Position, an der der Materialfehler im Band vorliegt, exakt zu bestimmen. Um den Materialfehler zu einem späteren Zeitpunkt wieder aufzufinden, kann das Bandmaterial nach dem erfassten Oberflächenstrukturmerkmal abgesucht werden. Mit dem Wiederauffinden des Oberflächenstrukturmerkmals ist somit auch die Position des Materialfehlers gefunden. Hierdurch kann auf bisher übliche Kennzeichnungen, die auf oder in das Bandmaterial eingebracht werden, verzichtet werden.

Da dass erfinderische Verfahren ferner dazu geeignet ist, eine Vielzahl von Materialfehlern und von Oberflächenstrukturmerkmalen in einem Bandmaterial zu erfassen, ohne das Bandmaterial zu stoppen bzw. zu verlangsamen, ist das erfinderische Verfahren zudem besonders kostengünstig durchzuführen.

Der zu erfassende Bandmaterialabschnitt zum Bestimmen des Oberflächenstrukturmerkmals kann dabei unabhängig von dem Bereich des Materialfehlers sein, d. h., es muss kein Abschnitt im Bereich des Materialfehlers erfasst werden, er sollte jedoch zumindest in unmittelbarer Nähe sein. Der Bereich des Bandmaterials, in dem das Oberflächenstrukturmerkmal erfasst wird, kann bspw. in der quer zur Bandlaufrichtung liegenden Ebene des Materialfehlers liegen. Auch kann der erfasste Bereich zu einem Bezugspunkt des Bandmaterials, wie bspw. der Außenkante, fest definiert werden, so dass die Erfassung des Oberflächenstrukturmerkmals bspw. in einem Abstand von 20 cm zur Außenkante und auf Höhe des Materialfehlers erfolgt.

Das Erfassen des Materialfehlers und des Oberflächenstrukturmerkmals erfolgt, während sich das Bandmaterial bewegt, d. h beim Erfassen erfolgt eine relative Positionsveränderung des Bandmaterials zu den Sensoren.

Unter dem Oberflächenstrukturmerkmal werden ein oder mehrere Strukturen an oder in der Oberfläche eines Gegenstandes verstanden. Dabei kann es sich insbesondere um natürliche Strukturen handeln, d. h. Strukturen, die bei der Herstellung oder Bearbeitung des Gegenstandes entstanden sind und nicht nachträglich bzw. als zusätzliche Strukturen in die Oberfläche ein- oder aufgebracht wurden.

Um einen besonders einfachen Zugriff auf den abgespeicherten Strukturdatensatz zu erhalten, ist die Speichereinheit als externer Speicher ausgebildet, auf den bspw. mittels einer Steuervorrichtung und weiterer Vorrichtungen zum Bearbeiten des Bandmaterials zugegriffen werden kann.

Unter einem Strukturdatensatz wird ein Datensatz verstanden, der das erfasste Oberflächenmerkmal insbesondere in Form von Zahlenwerten darstellt. Abhängig von der Funktionsweise des Markierungssensors kann es sich dabei bspw. um eine umgewandelte Bilddatei handeln.

Nach den Schritten zum Markieren des Bandmaterials wird das Oberflächenstrukturmerkmal zum Erfassen und Bearbeiten des Materialfehlers durch einen den ersten Markierungssensor nachfolgenden zweiten Markierungssensor erfasst und ein das Oberflächenstrukturmerkmal darstellender zweiter Strukturdatensatz ermittelt, wobei die Fehlerposition auf dem Bandmaterial durch einen Vergleich des vorliegenden ersten Strukturdatensatzes mit dem ermittelten zweiten Strukturdatensatz identifiziert wird und bei einer Übereinstimmung der Strukturdatensätze eine Bearbeitungseinheit angesteuert wird, die das Bandmaterial im Bereich des Materialfehlers bearbeitet, bspw. den Materialfehler herausschneidet oder repariert.

Der eingesetzte zweite Markierungssensor entspricht dabei dem ersten Markierungssensor, so dass beide Markierungssensoren das gleiche Oberflächenstrukturmerkmal erfassen. Dabei sollte auch die Funktionsweise der Markierungssensoren und die Umwandlungsparameter zum Umwandeln der erfassten Oberflächenstrukturmerkmale in den Strukturdatensatz identisch sein, um eine gute Vergleichbarkeit zu erreichen.

Das Erfassen des Oberflächenstrukturmerkmals durch den zweiten Markierungssensor und das Bearbeiten des Materialfehlers können dem Markieren durch den ersten Markierungssensor direkt nachfolgend durchgeführt werden, so dass bspw. ein Bandmaterial markiert, anschließend weitergefördert, nachfolgend die Position des Materialfehlers erfasst, identifiziert und bearbeitet wird.

Auch ist es möglich, das Erfassen und Bearbeiten des Materialfehlers zu einem späteren Zeitpunkt durchzuführen und nach einer Weiterbildung der Erfindung das Bandmaterial nach dem Markieren aufzurollen, zu transportieren und/oder zu lagern. So kann bspw. ein Bandmaterial auf einer ersten Vorrichtung hergestellt werden, der Materialfehler wird erfasst und das Bandmaterial wird von der Vorrichtung entnommen. Auf einer weiteren, bspw. einer räumlich getrennt angeordneten Vorrichtung, kann dann, bspw. auch nach einer zwischenzeitlichen Weiterbearbeitung des Bandmaterials, die Erfassung und Bearbeitung des Materialfehlers durchgeführt werden.

Der Vergleich der Strukturdatensätze wird zumeist von einer Rechnereinheit bzw. einer Steuereinheit durchgeführt. Inwieweit dabei Identität der Strukturdatensätze vorliegt, muss, um eine Übereinstimmung festzustellen, ist individuell vom Nutzer festlegbar. So kann bspw. eine vollständige Übereinstimmung als identisch festgelegt werden. Auch kann Übereinstimmung bspw. vorliegen, sobald eine Übereinstimmung der beiden Strukturdatensätze oberhalb einer Toleranzschwelle vorliegt. Bei Festlegung von entsprechenden Parametern kann bspw. auch ein prozentualer Zahlenwert festgelegt werden, bei dem Übereinstimmung vorliegt. Bei zu großen Abweichungen zwischen den Datensätzen besteht jedoch die Gefahr, dass beim erneuten Erfassen der Oberflächenstrukturmerkmale Abschnitte als übereinstimmend identifiziert werden, bei denen es sich nicht um den Abschnitt mit Materialfehler handelt.

Nach dem Erfassen von Materialfehlern durchläuft das Bandmaterial häufig verschiedene Vorrichtungselemente wie bspw. Umlenkrollen, Führungsvorrichtungen oder Bearbeitungseinheiten. Dabei kann es jedoch zu ungewollten Veränderungen der Oberfläche kommen, die bspw. auch die erfassten Oberflächenstrukturmerkmale beeinflussen. So können bspw. erhöhte Reibungen, Verschmutzungen o.ä. auftreten, die die Oberflächenstrukturmerkmale verändern.

Zur Überprüfung und ggf. Bestimmung, ob Bestandteile einer Vorrichtung die Oberfläche des Bandmaterials verändern oder beeinflussen, ist es nach einer Weiterbildung der Erfindung vorgesehen, dass zwischen dem ersten und dem zweiten Markierungssensor mindestens ein dritter Markierungssensor das Oberflächenstrukturmerkmal erfasst und ein dritter Strukturdatensatz ermittelt wird, wobei mindestens der erste, zweite und/oder dritte Strukturdatensatz miteinander verglichen und Veränderungen zwischen den Strukturdatensätzen, die Veränderungen des Oberflächenstrukturmerkmals entsprechen, ermittelt werden und die ermittelten Veränderungen ggf. bei der Identifizierung der Fehlerposition berücksichtigt werden.

Durch die Anordnung eines dritten Markierungssensors, der dem ersten bzw. zweiten Markierungssensor entspricht, kann der Ort der Oberflächenbeeinflussung exakt ermittelt werden. So ist es bspw. möglich, nach dem ersten Markierungssensor einen dritten Markierungssensor vor einer Umlenkrolle und den zweiten Markierungssensor hinter der Umlenkrolle zu positionieren. Durch die Aufnahme des Oberflächenstrukturmerkmals durch den zweiten und dritten Markierungssensor und einen Vergleich der daraus ermittelten Strukturdaten kann der Einfluss der Umlenkrolle auf die Oberfläche ermittelt werden.

Eine derartige Verwendung kann selbstverständlich auch mit einer Vielzahl von weiteren Markierungssensoren, die zwischen dem ersten und dem zweiten Markierungssensor angeordnet sind, durchgeführt werden.

Dies Bei Bedarf, wenn z. B. die Veränderungen der Oberflächenstrukturmerkmale ein Ausmaß annehmen, welche zu einer Fehlidentifikation des Materialfehlers führen, können die ermittelten Veränderungen bspw. auch bei dem Vergleich der Strukturdaten zur Identifizierung des Materialfehlers berücksichtigt werden.

Insbesondere besteht eine Verbesserung darin, dass die relative Lage und Größe des Fehlerort bzw. der Fehlerart und die Lage des einen oder der mehreren Oberflächenstrukturmerkmale ebenfalls verarbeitet wird. Somit kann stromabwärts nach Identifikation des Oberflächenstrukturmerkmals die Fehlerstelle bzw. der Bereich unmittelbar bestimmt werden.

Gemäß einer Weiterbildung der Erfindung ist vorgesehen, dass zwischen dem ersten und dem zweiten Markierungssensor ein Eingangssensor das Oberflächenstrukturmerkmal des

Bandmaterials erfasst, bevor eine zweite Bearbeitungseinheit die Oberflächenstruktur des Bandmaterials verändert und aus den erfassten Oberflächenstrukturmerkmalen ein Eingangsdatensatz erstellt (ggf. abgespeichert) und mit dem ersten Strukturdatensatz verglichen wird und bei einer Übereinstimmung des ersten Strukturdatensatzes mit dem Eingangsdatensatz ein Ausgangssensor das Oberflächenstrukturmerkmal des aus der zweiten Bearbeitungsstation austretenden Bandmaterials unter Berücksichtigung der Durchlaufgeschwindigkeit des Bandmaterials durch die beiden Sensoren und dem Abstand der Sensoren zueinander erfasst und ein Ausgangsdatensatz ermittelt und abgespeichert wird.

Diese spezielle Ausführungsform ermöglicht die Verwendung des Verfahrens, für den Fall, dass die Oberfläche derart bearbeitet wird, dass anhand des ersten und zweiten Strukturdatensatzes keine oder nur eine unzuverlässige Identifizierung des Materialfehlers möglich ist. Derartige Bearbeitungsschritte können bspw. das Walzen oder Beschichten des Bandmaterials sein.

Mit der Identifizierung des Materialfehlers am Eingangssensor wird unter Beachtung der Geschwindigkeit des Bandmaterials zwischen dem Eingangssensor und dem Ausgangssensor und dem Abstand der beiden Sensoren zueinander der Zeitpunkt ermittelt, an dem der Bandabschnitt mit dem Materialfehler in den Erfassungsbereich des Ausgangssensors kommt. Der Ausgangssensor erfasst dann die Oberflächenstrukturmerkmale -der neuen Oberfläche- im Bereich des Materialfehlers und speichert diese als Ausgangsdatensatz ab. So wird trotz erheblicher Änderung der Struktur der Oberfläche die Möglichkeit zur Identifizierung der Position des Materialfehlers beibehalten.

Besonders bevorzugt kann der daraus erstelle Ausgangsdatensatz und mindestens der erste Strukturdatensatz verglichen und die Veränderung erfasst werden, um bspw. die Wirksamkeit der zweiten Bearbeitungseinheit zu kontrollieren. Dies kann bspw. durch eine Kontrolle mit vorliegenden Soll-Werten erfolgen.

Alternativ oder ergänzend wird der daraus erstelle Ausgangsdatensatz zur Identifizierung der Fehlerposition auf dem Bandmaterial durch einen Vergleich des vorliegenden Ausgangsdatensatzes anstatt des ersten Strukturdatensatzes mit dem ermittelten zweiten Strukturdatensatz benutzt.

Der Eingangssensor und der Ausgangssensor entsprechen somit in ihrer Funktions- und Wirkungsweise den Markierungssensoren, bzw. es sind Markierungssensoren. Auch die Eingangs- und Ausgangsdatensätze werden entsprechend den Strukturdatensätzen ermittelt, um eine Vergleichbarkeit mit diesen zu erreichen.

Um die Genauigkeit der Identifizierung zu verbessern oder auch eine besonders sichere Erfassung der Oberflächenstrukturmerkmale, bspw. bei sehr hohen Bandlaufgeschwindigkeiten (Papierindustrie) zu gewährleisten, wird nach einer Weiterbildung der Erfindung eine Groberfassung der Fehlerposition durchgeführt, bei der die Fehlerposition unter Berücksichtigung der Bandlaufgeschwindigkeit ermittelt wird.

Zudem kann besonders bevorzugt die Erfassung der Oberflächenstrukturmerkmale durch die Markierungs- und/oder Eingangs-/Ausgangssensoren (im Weiteren nur Markierungssensoren) erst erfolgen, sobald unter Berücksichtigung der Groberfassung der Eintritt der vom ersten Markierungssensor ermittelten Oberflächenstruktur in den Erfassungsbereich des jeweiligen Sensors zu erwarten ist.

Das heißt, dass es bspw. möglich ist, die von den Markierungssensoren erfassten Oberflächenstrukturdaten erst dann in Strukturdatensätze umzuwandeln, wenn der Bandabschnitt mit dem Materialfehler erfasst wird. Alternativ können die Markierungssensoren bspw. erst aktiviert werden, sobald der Bandabschnitt mit Materialfehler in ihren Erfassungsbereich kommt und/oder es ist möglich, nur die (Struktur-)Datensätze abzuspeichern, die den Fehlerbereich im Bandmaterial umfassen.

Durch die Kombination der Positionsbestimmung mit der Identifizierung ist somit eine deutliche Entlastung der für das Verfahren verwendeten Vorrichtungen, insbesondere der Sensoren, Speichereinheit und ggf. einer Steuerungseinheit möglich, die wiederum zu einer besonders kostengünstigen Durchführung des Verfahrens führt.

Zur Entlastung der Speichereinheit und um eine sichere Durchführung des Verfahrens zu gewährleisten, ist es ferner besonders bevorzugt, die in der Speichereinheit abgespeicherten Datensätze nach dem Bearbeiten des Bandabschnittes aus der Speichereinheit zu löschen.

Grundsätzlich ist es möglich, dass die Markierungssensoren die Oberfläche des Bandmaterials permanent erfassen und bzw. auch einen permanenten Strukturdatensatz erstellen. In diesem Fall werden zur Identifizierung die Abschnitte der Strukturdatensätze benutzt, in denen das Oberflächenstrukturmerkmal erkannt wird. Der Vorteil an einem permanenten Strukturdatensatz ist, dass das System erkennt, wann ein relevanter Bandabschnitt sich einem Sensor nähert.

Der Aufwand einer permanenten Erfassung ist jedoch sehr hoch, da extrem große Datenmengen verarbeitet werden müssen. Insofern erfasst der erste und/oder der zweite Markierungssensor ein Oberflächenstrukturmerkmal besonders bevorzugt von einem Abschnitt des Bandmaterials, indem der Materialfehler vorliegt, wobei der Abschnitt ausgehend von der Position des Materialfehlers insbesondere eine Länge von +/-150 cm, bevorzugt +/- 50, besonders bevorzugt +/- 30 cm und/oder vorteilhaft +/- 15 cm oder weniger aufweist.

Die erfinderischen Abschnittslängen erhöhen die Identifizierungsgenauigkeit deutlich, da größere Bandabschnittsbereiche miteinander verglichen werden. Insbesondere bei unbeabsichtigt auftretenden Oberflächenveränderungen oder auch nur abschnittsweise auftretenden Oberflächenveränderungen, die bspw. durch Umlenkrollen oder auch Verschmutzungen herbeigeführt werden können, ist der Vergleich größerer Bandmaterialabschnitte besonders wirkungsvoll.

Die von den Markierungssensoren erfassten Abschnitte können dabei sowohl den Bandabschnitt an der Position des Materialfehlers als auch Bandabschnitte vor und/oder nach der Position des Materialfehlers umfassen. Die Länge des Bandabschnitts kann bspw. auch von der Geschwindigkeit des Bandmaterials anhängig sein, so dass bei einer Papierbahn ein längerer Abschnitt erfasst wird als bei einem Metallband.

Grundsätzlich können alle vorhandenen Markierungssensoren, Eingangs-/ und Ausgangssensoren zum Erfassen der vorgenannten Bandabschnittsbereiche ausgebildet sein.

Die Erfassung des Materialfehlers kann mittels üblicher Fehlersensoren erfolgen und ist insbesondere von der Materialart, aus dem das Bandmaterial besteht und den zu erfassenden Oberflächeneigenschaften abhängig. Nach einer Weiterbildung der Erfindung wird der Materialfehler und/ oder das Oberflächenstrukturmerkmal jedoch optisch erfasst, wobei der Materialfehler insbesondere mit einer optischen Zeilenkamera erfasst wird.

Optische Erfassungssysteme können bei einem sich bewegenden Bandmaterial besonders gut eingesetzt werden, da sie weitestgehend unabhängig von der Bandlaufgeschwindigkeit verwendbar sind.

Auch die Erfassung des Oberflächenstrukturmerkmals kann mittels Sensoren erfolgen, die bspw. eine optische Erfassung durchführen. Hierbei wird bspw. mittels einer Kamera ein Bild, insbesondere ein hochauflösendes Bild, von der Oberfläche erstellt, aus dem die relevanten Oberflächenstrukturmerkmale ausgelesen werden.

Gemäß einer Weiterbildung der Erfindung werden als Oberflächenstrukturmerkmal die Rauigkeit, Transparenz, Farbe, und/oder insbesondere ein Streumuster eines auf die Oberfläche des Bandmaterials auftreffenden Laserlichts erfasst. Das Messen von Streumustern eines Laserlichts ist unter dem Ausdruck Laser Surface Authentication-Methode (LSA) bekannt. Die LSA ist insofern besonders geeignet, da Streumuster eines Laserlichts einen besonders hohen Grad an Individualität aufweisen. Hinzu kommt, dass die Erfassung von Streumustern von äußeren Einflüssen, wie bspw. Lichteinfall, weitestgehend unabhängig ist.

Sowohl als Fehlersensor als auch als Sensor zum Erfassen des Oberflächenstrukturmerkmals (Markierungssensor, Eingangs-/Ausgangssensor) sind zudem Kamerasysteme mit Polarisationsfilter geeignet. Diese ermöglicht die Aufnahme der Oberfläche in unterschiedlichen Polarisationsebenen, wodurch bspw. störende Lichtreflexe an der Oberfläche des Bandmaterials bei der Ermittlung der Fehler bzw. der Ermittlung des Oberflächenstrukturmerkmals ausgefiltert werden können. Insbesondere kann eine Polarisationskamera, d. h. eine Kamera, die einen Bildsensor mit mehreren Polarisationsfiltern aufweist und somit in der Lage ist, mehrere Polarisationsebenen von Licht gleichzeitig zu erfassen, eingesetzt werden.

Grundsätzlich kann das erfinderische Verfahren bei allen Materialarten eingesetzt werden, die als Band- oder Strangmaterialien hergestellt, verwendet oder bearbeit werden, Voraussetzung ist jedoch, dass von dem Material die Oberflächenstrukturmerkmale erfasst werden können, während sich das Bandmaterial bewegt. Insofern besteht das Bandmaterial besonders bevorzugt aus einem Metall, einem Glas, einem Kunststoff und/oder aus einem cellulosehaltigen Substrat, insbesondere einem Papier oder Pappe.

Weiter löst die Erfindung die Aufgabe durch eine Vorrichtung zum Markieren eines Materialfehlers in einem Bandmaterial mit einem Fehlersensor zum Erfassen des Materialfehlers, bei einem sich bewegenden Bandmaterial, einem ersten Markierungssensor, der dazu ausgebildet ist, ein Oberflächenstrukturmerkmal des sich bewegenden Bandmaterials im Bereich des Materialfehlers zu erfassen und dieses als ersten Strukturdatensatz abzuspeichern.

Die erfinderische Vorrichtung ermöglicht somit eine besonders einfache Markierung eines Materialfehlers in einem Bandmaterial, dadurch, dass sie die Position eines Materialfehlers im Bandmaterial mit einer Position eines Oberflächenstrukturmerkmals in Anhängigkeit voneinander bringt. Zum späteren Wiederauffinden des Materialfehlers ist daher keine erneute aufwendige Materialprüfung, die gegebenenfalls nicht mehr möglich ist, oder das aufwendige Auffinden eines an- oder eingebrachten Kennzeichens notwendig, sondern es kann besonders einfach über eine erneute Erfassung der Oberflächenstrukturmerkmale die Position des Materialfehlers ermittelt werden.

Die Vorrichtung weist zusätzlich einen zweiten Markierungssensor, der dazu ausgebildet ist, ein Oberflächenstrukturmerkmal des Bandmaterials zu erfassen, eine Vorrichtung zum Erstellen eines zweiten Strukturdatensatzes aus den erfassten Oberflächenstrukturmerkmalen, einer Vorrichtung zum Auswerten von Datensätzen, die dazu ausgebildet ist, zumindest den ersten und zweiten Strukturdatensatz zu vergleichen und einer Vorrichtung, die bei einer Übereinstimmung der Strukturdatensätze eine Bearbeitungseinheit ansteuert, die das Bandmaterial im Bereich des Materialfehlers bearbeitet.

Der zweite Markierungssensor ist entsprechend dem ersten Markierungssensor ausgebildet, wobei die Markierungssensoren insbesondere auch zum Erstellen des Strukturdatensatzes und zum Übermitteln dieses in eine Speichereinheit ausgelegt sind.

Des Weiteren oder alternativ kann eine oder mehrere Steuereinheiten vorgesehen sein, die bspw. die Strukturdatensätze erstellt, die Datensätze auswertet und vergleicht und/oder die Bearbeitungseinheit ansteuert.

Für eine besonders exakte Identifizierung erfolgt jedoch die Messung eines Streumusters eines auf die Oberfläche des Bandmaterials auftreffenden Laserlichts. Daher ist der erste und zweite Markierungssensor besonders bevorzugt ein Lasersensor, der als Oberflächenstrukturmerkmal ein Streumuster eines auf die Oberfläche des Bandmaterials auftreffenden Laserlichts erfasst. Weitere Markierungssensoren und/oder Eingangs-/ Ausgangssensoren können entsprechend ausgebildet ein.

Im Weiteren wird die Erfindung anhand eines Ausführungsbeispiels näher beschrieben.
- Fig. 1: zeigt schematisch eine Vorrichtung zum Markieren, Erfassen und Bearbeiten eines Materialfehlers in einem Bandmaterial;
- Fig.2: zeigt schematisch die Vorrichtung aus Fig.1 mit einer zweiten Bearbeitungseinheit.

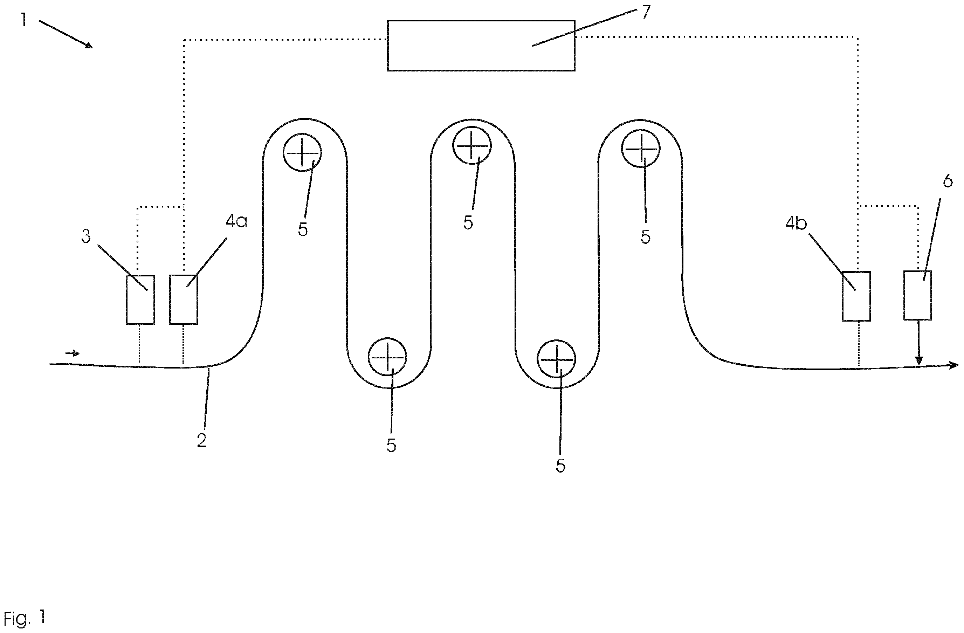

Figur 1 zeigt ein Bandmaterial 2, das durch eine Vorrichtung 1 zum Markieren, Erfassen und Bearbeiten eines Materialfehlers in einem Bandmaterial geführt wird. Das Bandmaterial 2 ist ein Stahlband. Die Vorrichtung 1 weist weiter einen optischen Sensor 3, bspw. eine Zeilenkamera auf, die zum Erfassen von Fehlern, z.B. Mikrorissen in der Oberfläche des Bandmaterials 2 ausgebildet ist.

Dem optischen Sensor 3 in Bandlaufrichtung ist ein erster Markierungssensor 4a nachgeordnet, bei dem es sich um eine Laser-Streulicht-Messungsvorrichtung handelt, die dazu ausgebildet ist, das sogenannte LSA-Verfahren durchzuführen.

Im Weiteren weist die Vorrichtung 1 mehrere Umlenkrollen 5 auf, um die das Bandmaterial 2 herumgeführt wird. Zum Erfassen der Position des Materialfehlers ist ein zweiter Markierungssensor 4b angeordnet, der ebenfalls als Laser-Streulicht-Messungsvorrichtung ausgebildet ist.

In Bandlaufrichtung nachfolgend ist hinter dem zweiten Markierungssensor 4b eine Bearbeitungseinheit 6, die als Stahlbandschneidvorrichtung ausgebildet ist, angeordnet.

Die Markierungssensoren 4a, 4b, der optische Sensor 3 zur Fehlererfassung und die erste Bearbeitungseinheit 6 sind über eine Steuereinheit 7 miteinander verbunden (gestrichelt dargestellt).

Im Betrieb wird das Bandmaterial 2 ausgehend von einer Rolle (hier nicht dargestellt) am optischen Sensor 3 vorbeigeführt. Der optische Sensor 3 erfasst die Oberfläche des Bandmaterials 2 und wertet diese aus. Sobald er einen Materialfehler, in diesem Fall einen Mikroriss erfasst, sendet er ein Signal an die Steuereinheit 7.

Die Steuereinheit 7 aktiviert den ersten Markierungssensor 4a derart, dass diese eine Streulichtmessung auf einem Abschnitt der Oberfläche des Bandmaterials 2 durchführt. Dabei erfasst der erste Markierungssensor 4a einen Oberflächenabschnitt des Bandmaterials 2, in dem der von dem optischen Sensor 3 ermittelte Mikroriss ist, d.h., der vom ersten Markierungssensor 4a erfasste Abschnitt ist in einer sich quer zur Laufrichtung des Bandmaterials 2 erstreckenden Ebene, in der sich auch der Mikroriss befindet.

Um später eine bessere Identifizierung zu ermöglichen, erfasst der Markierungssensor 4a zusätzlich zu dem Bandabschnittsbereich, in dem der Mikroriss lokalisiert wurde, jeweils einen Bandabschnitt 15cm und vor und nach dem Bereich mit dem Mikroriss. D.h., wenn der Bereich mit Mikroriss eine Länge von 5 cm in Bandlaufrichtung hat, erfasst der Sensor einen Bandabschnitt von insgesamt 35 cm lang.

Die von dem Markierungssensor 4a erfassten Oberflächenstrukturmerkmale, in diesem Fall die Streuung eines von dem Markierungssensor auf die Bandmaterialoberfläche aufgeworfenen Laserlichts, wird zu einem Strukturdatensatz umgewandelt, an die Steuereinheit 7 übermittelt und dort gespeichert.

Im weiteren Verlauf durchläuft das Bandmaterial 2 die Umlenkrollen 5. Alternativ könnten in diesem Bereich beispielsweise weitere Bearbeitungseinheiten oder Führungsvorrichtungen angeordnet sein.

Am Ende der Vorrichtung 1 tritt das Bandmaterial 2 in den Erfassungsbereich des zweiten Markierungssensors 4b ein. Dieser erfasst die gleichen Oberflächenstrukturmerkmale, wie der erste Markierungssensor 4a. Die von ihm erfassten Oberflächenstrukturmerkmale werden in einen zweiten Strukturdatensatz umgewandelt und ebenfalls an die Steuereinheit 7 übermittelt. Die Steuereinheit 7 vergleicht den gespeicherten ersten Strukturdatensatz mit dem zweiten Strukturdatensatz und aktiviert bei einer festgestellten Übereinstimmung die Bearbeitungseinheit 6, so dass der Bandabschnitt mit Mikroriss aus dem Band herausgetrennt wird. In diesem Fall trennt die Bearbeitungseinheit 6 den vollständig erfassten Bereich von 35cm heraus. Alternativ kann die Steuerung auch dazu ausgebildet sein, kurze Bandabschnitte, bspw. nur den Mikroriss oder den Mikroriss mit einem kurzen Sicherheitsbereich herauszutrennen.

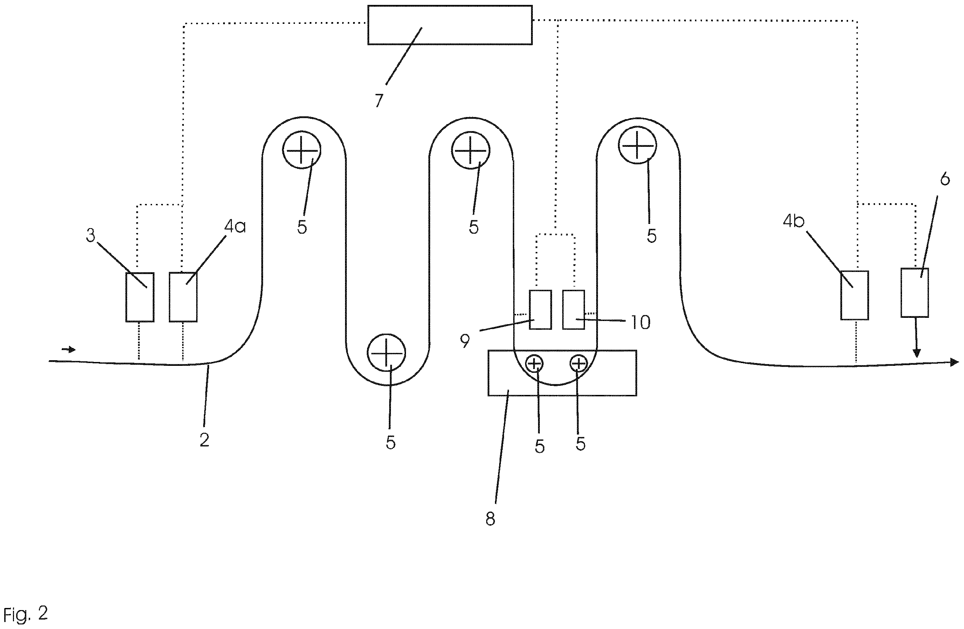

Figur 2 zeigt entsprechend der Figur 1 eine schematisch dargestellte Vorrichtung 1 gemäß der Erfindung zum Markieren, Erfassen und Bearbeiten eines Materialfehlers in einem Bandmaterial 2. Zusätzlich zur Darstellung in Figur 1 durchläuft das Bandmaterial 2 eine zweite Bearbeitungseinheit 8, die in diesem Fall als Zinkbad zum Verzinken der Oberfläche des Stahlbands ausgebildet ist. Da die Oberflächenverzinkung die vom ersten Markierungssensor 4a erfassten Oberflächenstrukturmerkmale überdeckt, so dass diese durch den zweiten Markierungssensor 4b nicht wieder aufgefunden werden können, ist vor dem Eintritt in die zweite Bearbeitungseinheit 8 ein Eingangssensor 9 und am Austritt der zweiten Bearbeitungseinheit 8 ein Ausgangssensor 10 angeordnet.

Der Eingangssensor 9 und der Ausgangssensor 10 sind identisch mit den Markierungssensoren 4a, 4b ausgebildet, die ebenfalls das LSA-Verfahren durchführen. Die von dem Eingangssensor 9 und dem Ausgangssensor 10 erfassten Oberflächenstrukturmerkmale werden ebenfalls als Eingangs-/Ausgangsdatensätze an die Steuereinheit 7 übermittelt. Die Steuereinheit 7 wiederum vergleicht die von dem Eingangssensor 9 übermittelten Daten mit den ersten Strukturdaten. Sobald eine Übereinstimmung der beiden Datensätze vorliegt, ermittelt die Steuereinheit 7 aus der ihr bekannten Bandgeschwindigkeit und dem Abstand zwischen dem Eingangssensor 9 und dem Ausgangssensor 10, zu welchem Zeitpunkt der Bandabschnitt mit dem Materialfehler in den Erfassungsbereich des Ausgangssensors 10 eintritt.

Mit Zeitpunkt des Eintritts des Materialfehlers in den Erfassungsbereich des Ausgangssensors 10 ermittelt dieser das Oberflächenstrukturmerkmal der jetzt verzinkten Oberfläche des Bandmaterials 2 im Bereich des Materialfehlers, wandelt dieses in einen Ausgangsdatensatz um und übermittelt diesen an die Steuereinheit 7, die ihn abspeichert.

Zur Identifizierung des Materialfehlers durch den zweiten Markierungssensor 4b vergleicht die Steuereinheit 7 jetzt die von dem zweiten Markierungssensor 4b übermittelten Strukturdaten mit den gespeicherten Ausgangsdaten des Ausgangssensors 10. Bei einer Übereinstimmung aktiviert die Steuereinheit 7 entsprechend den Ausführungen zu Figur 1 die Bearbeitungseinheit 6, die den fehlerhaften Bandabschnitt aus dem Bandmaterial 2 heraustrennt.

Alternativ ist die Steuereinheit 7 beispielsweise auch dazu ausgebildet, den Eingangsdatensatz mit dem ersten Strukturdatensatz zu vergleichen, um festzustellen, welchen Einfluss beispielsweise die Umlenkrollen 5 auf die Oberfläche ausüben. Dementsprechend kann die Steuereinheit 7 beispielsweise auch den Eingangsdatensatz mit dem Ausgangsdatensatz vergleichen, wodurch, der Einfluss des Zinkbades erfasst werden kann. Der Ausgangsdatensatz oder auch die Daten der Veränderung können beispielsweise mit einem Sollwert verglichen werden, um feststellen zu können, ob das Zinkbad erfolgreich war.

Ebenfalls alternativ können zwischen dem ersten und dem zweiten Markierungssensor weitere Markierungssensoren vorgesehen sein, beispielsweise vor und hinter einer Umlenkrolle 5, um den Einfluss einer Umlenkrolle 5 auf die Oberflächenstrukturmerkmale zu erfassen. So wäre es beispielsweise möglich, einzelne Vorrichtungselemente (Umlenkrolle, Führungselemente etc.), die an dem Bandmaterial Störungen herbeirufen, wie beispielsweise eine erhöhte Reibung, Verschleiß oder eine Verschmutzung der Oberfläche bewirken, auf besonders einfache Weise zu erkennen.

Obwohl mancher Aspekt im Zusammenhang mit einem Verfahren beschrieben wurde, versteht es sich, dass diese Aspekte auch eine Beschreibung der entsprechenden Vorrichtung darstellen, so dass beispielsweise ein entsprechender Verfahrensschritt oder ein Merkmal eines Verfahrensschrittes auch als Element der Vorrichtung zu verstehen ist. Analog dazu stellen Aspekte, die im Zusammenhang mit der Vorrichtung beschrieben wurden, auch eine Beschreibung eines entsprechenden Verfahrensschrittes oder eines Merkmals eines Verfahrensschrittes dar.

## Patentansprüche

1. Verfahren zum Markieren eines Materialfehlers in einem Bandmaterial (2) mit den Schritten:
- Erfassen eines Materialfehlers in einem sich bewegenden Bandmaterial (2) durch einen Fehlersensor (3),
- Erfassen mindestens eines Oberflächenstrukturmerkmals im Bereich des erfassten Materialfehlers durch einen ersten Markierungssensor (4a) und Ermittlung eines das Oberflächenstrukturmerkmal darstellenden ersten Strukturdatensatzes,
- Abspeichern des Strukturdatensatzes,
- wobei nach dem Abspeichern des Strukturdatensatzes
- das Oberflächenstrukturmerkmal durch einen dem ersten Markierungssensor (4a) nachfolgenden zweiten Markierungssensor (4b) erfasst und ein das Oberflächenstrukturmerkmal darstellender zweiter Strukturdatensatz ermittelt wird,
- die Fehlerposition auf dem Bandmaterial (2) identifiziert wird durch einen Vergleich des gespeicherten ersten Strukturdatensatzes mit dem ermittelten zweiten Strukturdatensatz und
- bei einer Übereinstimmung der Strukturdatensätze eine Bearbeitungseinheit (6) angesteuert wird, die das Bandmaterial (2) im Bereich des Materialfehlers bearbeitet,
**dadurch gekennzeichnet, dass**
- zwischen dem ersten und dem zweiten Markierungssensor (4a, 4b) ein Eingangssensor (9) das Oberflächenstrukturmerkmal des Bandmaterials (2) erfasst, bevor eine zweite Bearbeitungseinheit (8) die Oberflächenstruktur des Bandmaterials (2) verändert,
- aus dem erfassten Oberflächenstrukturmerkmal ein Eingangsdatensatz erstellt und mit dem ersten Strukturdatensatz verglichen wird und
- bei einer Übereinstimmung des ersten Strukturdatensatzes mit dem Eingangsdatensatz ein Ausgangssensor (10) das Oberflächenstrukturmerkmal des aus der zweiten Bearbeitungsstation austretenden Bandmaterials (2) unter Berücksichtigung der Durchlaufgeschwindigkeit des Bandmaterials (2) durch die zweite Bearbeitungseinheit (8) erfasst und
- ein Ausgangsdatensatz ermittelt und abgespeichert wird.

2. Verfahren nach Anspruch 1 **dadurch gekennzeichnet, dass** das Bandmaterial nach dem Erfassen des Oberflächenstrukturmerkmals aufgerollt, transportiert und/ oder gelagert wird.

3. Verfahren nach mindestens einem der Ansprüche 1 oder 2, **dadurch gekennzeichnet, dass** zwischen dem ersten und dem zweiten Markierungssensor (4a, 4b)
- mindestens ein dritter Markierungssensor das Oberflächenstrukturmerkmal erfasst und ein dritter Strukturdatensatz ermittelt wird,
- mindestens der erste, zweite und/oder dritte Strukturdatensatz miteinander verglichen und
- Veränderungen zwischen den Strukturdatensätzen, die Veränderungen des Oberflächenstrukturmerkmals entsprechen, ermittelt werden und
- ggf. die ermittelten Veränderungen bei der Identifizierung der Fehlerposition berücksichtigt werden.

4. Verfahren nach Anspruch 1, **dadurch gekennzeichnet, dass**
- die Fehlerposition auf dem Bandmaterial (2) identifiziert wird, durch einen Vergleich des vorliegenden Ausgangsdatensatzes mit dem ermittelten zweiten Strukturdatensatz und/oder
- der Ausgangsdatensatz und mindestens der erste Strukturdatensatz verglichen und die Veränderung erfasst wird.

5. Verfahren nach einem der vorhergehenden Ansprüche, **dadurch gekennzeichnet, dass** eine Groberfassung der Position des Materialfehlers unter Berücksichtigung einer Bandlaufgeschwindigkeit erfolgt und/oder
- die Erfassung des Oberflächenstrukturmerkmals durch die Markierungs- und/oder Eingangs-Ausgangssensoren (4a, 4b, 9, 10) erst erfolgt, sobald unter Berücksichtigung der Groberfassung der Eintritt der vom ersten Markierungssensor (4a) ermittelte Oberflächenstruktur in den Erfassungsbereich des jeweiligen Sensors bevorsteht.

6. Verfahren nach einem der vorhergehenden Ansprüche, **dadurch gekennzeichnet, dass** die abgespeicherten Strukturdaten, Eingangsdaten und/oder Ausgangsdaten nach dem Bearbeiten des Bandabschnittes aus der Speichereinheit gelöscht werden.

7. Verfahren nach einem der vorhergehenden Ansprüche, **dadurch gekennzeichnet, dass** der erste und/oder der zweite Markierungssensor (4a, 4b) ein Oberflächenstrukturmerkmal von einem Abschnitt des Bandmaterials (2) erfasst, in dem der Materialfehler vorliegt, wobei der Abschnitt ausgehend von der Position des Materialfehlers insbesondere eine Länge von +/-75 cm, bevorzugt +/- 50, bes bevorzugt +/- 30 cm und/oder vorteilhaft +/- 15 cm oder weniger aufweist.

8. Verfahren nach einem der vorhergehenden Ansprüche, **dadurch gekennzeichnet, dass** der Materialfehler und/oder das Oberflächenstrukturmerkmal optisch erfasst wird, wobei der Materialfehler insbesondere mit einer optischen Zeilenkamera erfasst wird.

9. Verfahren nach einem der vorhergehenden Ansprüche, **dadurch gekennzeichnet, dass** als Oberflächenstrukturmerkmal, die Rauigkeit. Transparenz, Farbe, und/oder insbesondere ein Streumuster eines auf die Oberfläche des Bandmaterials (2) auftreffenden Laserlichts erfasst wird.

10. Verfahren nach einem der vorhergehenden Ansprüche, **dadurch gekennzeichnet, dass** das Bandmaterial (2) aus einem Metall, einem Glas, einem Kunststoff und/oder aus einem zellulosehaltigen Substrat, insbesondere einem Papier oder einer Pappe besteht.

11. Vorrichtung zum Markieren eines Materialfehlers in einem Bandmaterial (2), mit
- einem Fehlersensor zum Erfassen des Materialfehlers bei einem sich bewegenden Bandmaterial (2),
- einem ersten Markierungssensor (4a), der dazu ausgebildet ist, ein Oberflächenstrukturmerkmal des sich bewegenden Bandmaterials (2) im Bereich des Materialfehlers zu erfassen,
- daraus einen ersten Strukturdatensatz zu ermitteln und
- in einer Speichereinheit abzuspeichern
und mit
- einem zweiten Markierungssensor (4b), der dazu ausgebildet ist ein Oberflächenstrukturmerkmal des Bandmaterials (2) zu erfassen
- einer Vorrichtung zum Erstellen eines zweiten Strukturdatensatzes aus den erfassten Oberflächenstrukturmerkmalen
- einer Vorrichtung zum Auswerten von Datensätzen, die dazu ausgebildet ist, zumindest den ersten und zweiten Strukturdatensatz zu vergleichen und
- einer Vorrichtung, die bei einer Übereinstimmung der Strukturdatensätze eine Bearbeitungseinheit ansteuert, die das Bandmaterial (2) im Bereich des Materialfehlers bearbeitet, **dadurch gekennzeichnet, dass**
- zwischen dem ersten und dem zweiten Markierungssensor (4a, 4b) ein Eingangssensor (9) angeordnet ist, der das Oberflächenstrukturmerkmal des Bandmaterials (2) erfasst, bevor eine zweite Bearbeitungseinheit (8) die Oberflächenstruktur des Bandmaterials (2) verändert, wobei die Vorrichtung dazu ausgebildet ist,
- aus dem erfassten Oberflächenstrukturmerkmal einen Eingangsdatensatz zu erstellen und mit dem ersten Strukturdatensatz zu vergleichen und
- bei einer Übereinstimmung des ersten Strukturdatensatzes mit dem Eingangsdatensatz mittels eines Ausgangssensors (10) das Oberflächenstrukturmerkmal des aus der zweiten Bearbeitungsstation austretenden Bandmaterials (2) unter Berücksichtigung der Durchlaufgeschwindigkeit des Bandmaterials (2) durch die zweite Bearbeitungseinheit (8) zu erfassen und einen Ausgangsdatensatz zu ermitteln und abzuspeichern.

12. Vorrichtung nach Anspruch 11, **dadurch gekennzeichnet, dass** der erste, zweite und/ oder mindestens ein weiterer Markierungssensor (4a, 4b) ein Lasersensor ist, der als Oberflächenstrukturmerkmal ein Streumuster eines auf die Oberfläche des Bandmaterials (2) auftreffenden Laserlichts erfasst.

## Claims

1. Method for marking a material defect in a sheet material (2), with the steps:
- sensing a material defect in a moving sheet material (2) by means of a defect sensor (3),
- sensing at least one surface structure feature in the region of the sensed material defect using a first marking sensor (4a) and determining of a structure data record representing the surface structure feature,
- storing the structure data record,
- wherein, after the storing of the structure data record,
- the surface structure feature is sensed by a second marking sensor (4b) following the first marking sensor (4a) and a second structure data record representing the surface structure feature is determined,
- the position of the defect on the sheet material (2) is identified by a comparison of the stored first structure data record with the second determined structure data record, and
- if the structure data records match, a processing unit (6) is actuated, which then processes the sheet material (2) in the region of the material defect, **characterised in that**
- between the first and second marking sensor (4a, 4b), an input sensor (9) senses the surface structure feature of the sheet material (2), before a second processing unit (8) changes the surface structure of the sheet material (2),
- from the surface structure feature which is sensed, an input data record is produced and compared with the first structure data record, and
- if the first structure data record and the input data record match, an output sensor (10) senses the surface structure feature of the sheet material (2) emerging from the second processing station, taking account of the run-through speed of the sheet material (2) through the second processing unit (8), and an output data record is determined and stored.

2. Method according to claim 1, **characterised in that**, the sheet material is rolled up, transported, and/or stored after the sensing of the surface structure feature.

3. Method according to any one of claims 1 or 2, **characterised in that**, between the first and the second marking sensors (4a, 4b)
- at least one third marking sensor senses the surface structure feature and a third structure data record is determined,
at least the first, second, and/or third structure data record are compared with one another, and
- changes between the structure data records which correspond to the changes in the surface structure feature are determined, and
- if appropriate, the changes which are determined are taken into account in the identification of the position of the defect.

4. Method according to claim 1, **characterised in that**
- the position of the defect on the sheet material (2) is identified by a comparison of the initial data record obtained with the second structure data record determined, and/or
- the initial data record and at least the first structure data record are compared and the change determined.

5. Method according to any one of the preceding claims, **characterised in that**
- a rough assessment of the position of the material defect is made, taking account of a sheet running speed, and/or
- the sensing of the surface structure feature by the marking sensor and/or by the input/output sensors (4a, 4b, 9, 10) first takes place as soon as, taking account of the rough assessment, the entry of the surface structure sensed by the first marking sensor (4a) into the sensing range of the respective sensor is imminent.

6. Method according to any one of the preceding claims, **characterised in that** the stored structure data, input data, and/or output data, are deleted from the memory storage unit after the processing of the sheet section.

7. Method according to any one of the preceding claims, **characterised in that** the first and/or the second marking sensor (4a, 4b) sense a surface structure feature from a section of the sheet material (2) in which the material defect is present, wherein the section, taking the position of the material defect as a starting point, exhibits in particular a length of +/- 75 cm, preferably +/- 50 cm, particularly preferred +/- 30 cm, and/or advantageously +/- 15 cm or less,

8. Method according to any one of the preceding claims, **characterised in that** the material defect and/or the surface structure feature is optically sensed, wherein the material defect is sensed in particular with an optical line scanning camera.

9. Method according to any one of the preceding claims, **characterised in that**, as a surface structure feature, the roughness, transparency, colour, and/or in particular a scatter pattern of a laser light impinging on the surface of the sheet material (2) are sensed.

10. Method according to any one of the preceding claims, **characterised in that** the sheet material (2) consists of a metal, a glass, a plastic, and/or a substrate containing cellulose, in particular a paper or a board.

11. Device for marking a material defect in a sheet material (2), with
- a defect sensor for sensing the material defect in a moving sheet material (2),
- a first marking sensor (4a), which is configured such as to sense a surface structure feature of the moving strip material (2) in the region of the material,
- and to determine from this a first structure data record, and
- storing this in a memory storage unit.
and with
- a second marking sensor (4b), which is configured such as to sense a surface structure feature of the sheet material (2),
- a device for determining a second structural data record from the surface structure features which have been sensed,
- a device for evaluating data records which is configured such as to compare at least the first and second structure data records,
and
- a device which, when the structure data records match, actuates a processing unit, which processes the sheet material (2) in the region of the material defect, **characterised in that**
- arranged between the first and the second marking sensor (4a, 4b) is a input sensor (9), which senses the surface structure feature of the sheet material (2), before a second processing unit (8) changes the surface structure of the sheet material (2), wherein the device is configured such as
- to determine from the sensed surface feature an input data record, and to compare this with the first structure data record,
and
- in the event that the first structure data record and the input data record match, sensing, by means of an output sensor (10), the surface structure feature of the sheet material (2) emerging from the second processing station, taking account of the run-through speed of the sheet material (2) through the second processing unit (8), and determining and storing an output data record.

12. Device according to claim 11, **characterised in that** the first, second, and/or at least one further marking sensor (4a, 4b) is a laser sensor, which senses, as a surface structure feature, a scatter pattern of a laser light impinging onto the surface of the sheet material (2).

## Revendications

1. Procédé de marquage d'un défaut de matériau dans un matériau en bande (2) avec les étapes de :
- détection d'un défaut de matériau dans un matériau en bande en mouvement (2) par un capteur de défaut (3),
- détection d'au moins une caractéristique de structure de surface dans la zone du défaut de matériau détecté par un premier capteur de marquage (4a) et détermination d'un premier jeu de données de structure représentant la caractéristique de structure de surface,
- mise en mémoire du jeu de données de structure,
- dans lequel après la mise en mémoire du jeu de données de structure
- la caractéristique de structure de surface est détectée par un deuxième capteur de marquage (4b) en aval du premier capteur de marquage (4a) et un deuxième jeu de données de structure représentant la caractéristique de structure de surface est déterminé,
- la position du défaut sur le matériau en bande (2) est identifiée par une comparaison du premier jeu de données de structure enregistré avec le deuxième jeu de données de structure déterminé et
- en cas de correspondance des jeux de données de structure, une unité de traitement (6), qui traite le matériau en bande (2) dans la zone du défaut de matériau, est commandée,
**caractérisé en ce que**
- entre le premier et le deuxième capteur de marquage (4a, 4b), un capteur d'entrée (9) détecte la caractéristique de structure de surface du matériau en bande (2), avant qu'une deuxième unité de traitement (8) modifie la structure de surface du matériau en bande (2),
- un jeu de données d'entrée est établi à partir de la caractéristique de structure de surface détectée et comparé avec le premier jeu de données de structure et
- en cas de correspondance du premier jeu de données de structure avec le jeu de données d'entrée, un capteur de sortie (10) détecte la caractéristique de structure de surface du matériau en bande (2) sortant de la deuxième station de traitement en tenant compte de la vitesse de défilement du matériau en bande (2) par la deuxième unité de traitement (8) et
- un jeu de données de sortie est déterminé et mis en mémoire.

2. Procédé selon la revendication 1, **caractérisé en ce que** le matériau en bande est enroulé, transporté et/ou stocké après la détection de la caractéristique de structure de surface.

3. Procédé selon au moins une quelconque des revendications 1 ou 2, **caractérisé en ce qu'**entre le premier et le deuxième capteur de marquage (4a, 4b)
- au moins un troisième capteur de marquage détecte la caractéristique de structure de surface et un troisième jeu de données de structure est déterminé,
- au moins le premier, deuxième et/ou troisième jeu de données de structure sont comparés l'un avec l'autre et
- des modifications entre les jeux de données de structure, qui correspondent à des modifications de la caractéristique de structure de surface, sont déterminées et
- le cas échéant les modifications déterminées lors de l'identification de la position du défaut sont prises en compte.

4. Procédé selon la revendication 1, **caractérisé en ce que**
- la position du défaut sur le matériau en bande (2) est identifiée, par une comparaison du jeu de données de sortie présent avec le deuxième jeu de données de structure déterminé et/ou
- le jeu de données de sortie et au moins le premier jeu de données de structure sont comparés et la modification est détectée.

5. Procédé selon l'une quelconque des revendications précédentes, **caractérisé en ce que**
- une détection grossière de la position du défaut de matériau a lieu en tenant compte d'une vitesse de défilement de bande et/ou
- la détection de la caractéristique de structure de surface par les capteurs de marquage et/ou d'entrée/sortie (4a, 4b, 9, 10) n'a lieu que lorsqu'en tenant compte de la détection grossière, l'entrée de la structure de surface déterminée par le premier capteur de marquage (4a) dans la zone de détection du capteur concerné est imminente.

6. Procédé selon l'une quelconque des revendications précédentes, **caractérisé en ce que** les données de structure, données d'entrée et/ou données de sortie mises en mémoire sont supprimées de l'unité de mémoire après le traitement de la section de bande.

7. Procédé selon l'une quelconque des revendications précédentes, **caractérisé en ce que** le premier et/ou le deuxième capteur de marquage (4a, 4b) détecte une caractéristique de structure de surface d'une section du matériau en bande (2), dans laquelle le défaut de matériau est présent, dans lequel la section partant de la position du défaut de matériau présente en particulier une longueur de +/- 75 cm, de préférence +/- 50, de manière particulièrement préférée +/- 30 cm et/ou de manière avantageuse +/- 15cm ou moins.

8. Procédé selon l'une quelconque des revendications précédentes, **caractérisé en ce que** le défaut de matériau et/ou la caractéristique de structure de surface est détectée optiquement, dans lequel le défaut de matériau est détecté en particulier avec une caméra linéaire optique.

9. Procédé selon l'une quelconque des revendications précédentes, **caractérisé en ce que** la rugosité, la transparence, la couleur, et/ou en particulier un motif de diffusion d'une lumière laser incidente à la surface du matériau en bande (2) est détectée en tant que caractéristique de structure de surface.

10. Procédé selon l'une quelconque des revendications précédentes, **caractérisé en ce que** le matériau en bande (2) est en un métal, un verre, un plastique et/ou en un substrat cellulosique, en particulier un papier, ou un carton.

11. Dispositif de marquage d'un défaut de matériau dans un matériau en bande (2) avec
- un capteur de défaut pour la détection du défaut de matériau dans un matériau en bande en mouvement (2),
- un premier capteur de marquage (4a), qui est réalisé pour détecter une caractéristique de structure de surface du matériau en bande en mouvement (2) dans la zone du défaut de matériau,
- déterminer à partir de là, un premier jeu de données de structure et
- le mettre en mémoire dans une unité de mémoire,
et avec
- un deuxième capteur de marquage (4b), qui est réalisé pour détecter une caractéristique de structure de surface du matériau en bande (2)
- un dispositif pour l'établissement d'un deuxième jeu de données de structure à partir des caractéristiques de structure de surface détectées,
- un dispositif pour l'évaluation de jeux de données, qui est réalisé pour comparer au moins le premier et deuxième jeu de données de structure et
- un dispositif, qui en cas de correspondance des jeux de données de structure, commande une unité de traitement, qui traite le matériau en bande (2) dans la zone du défaut de matériau, **caractérisé en ce que**
- un capteur d'entrée (9), qui détecte la caractéristique de structure de surface du matériau en bande (2), est agencé entre le premier et le deuxième capteur de marquage (4a, 4b), avant qu'une deuxième unité de traitement (8) modifie la structure de surface du matériau en bande (2), dans lequel le dispositif est réalisé
- pour établir un jeu de données d'entrée à partir de la caractéristique de structure de surface détectée et le comparer avec le premier jeu de données de structure et
- en cas de correspondance du premier jeu de données de structure avec le jeu de données d'entrée, pour détecter au moyen d'un capteur de sortie (10) la caractéristique de structure de surface du matériau en bande (2) sortant de la deuxième station de traitement en tenant compte de la vitesse de défilement du matériau en bande (2) par la deuxième unité de traitement (8) et pour déterminer et mettre en mémoire un jeu de données de sortie.

12. Dispositif selon la revendication 11, **caractérisé en ce que** le premier, deuxième et/ou au moins un autre capteur de marquage (4a, 4b) est un capteur laser, qui détecte un motif de diffusion d'une lumière laser incidente à la surface du matériau en bande (2) en tant que caractéristique de structure de surface.
